# EUROPÄISCHE PATENTANMELDUNG

(11) **EP 1 398 578 A1**
(43) Veröffentlichungstag der Anmeldung: **17.03.2004**
(21) Anmeldenummer: 02019869.3
(22) Anmeldetag: 10.09.2002
(51) Int. Cl.: F24H 1/16, F24H 8/00

(54) **Hochdruckreinigungsgerät**

(71) Anmelder: Alfred Kärcher GmbH & Co. KG, 71364 Winnenden (DE)
(72) Erfinder: Eschrich, Sven, 73663 Berglen (DE); Schwaderer, Rudi, 71397 Leutenbach (DE)
(74) Vertreter: Böhme, Ulrich, Dr. Dipl.-Phys.

(57) **Zusammenfassung**

Um bei einem Hochdruckreinigungsgerät mit einer Heizeinrichtung für geförderte Flüssigkeit, welche Heizeinrichtung einen Gasbrenner, eine von den Brenngasen des Gasbrenners beaufschlagte Flüssigkeitsleitung, einen Gasbrenner und Flüssigkeitsleitung umgebenden, eine Brennkammer bildenden und von der zu fördernden Flüssigkeit durchströmten und dadurch gekühlten Mantel und eine gekühlte Bodenfläche aufweist, aus der ein Kondensatabfluß austritt, die Konstruktion der Bodenfläche zu vereinfachen, wird vorgeschlagen, daß der Kondensatabfluß oberhalb der Bodenfläche angeordnet ist, so daß Kondensat erst dann in den Kondensatabfluß gelangt, wenn die Bodenfläche mit einer Kondensatschicht bedeckt ist.

## Beschreibung

Die Erfindung betrifft ein Hochdruckreinigungsgerät mit einer Heizeinrichtung für geförderte Flüssigkeit, welche Heizeinrichtung einen Gasbrenner, eine von den Brenngasen des Gasbrenners beaufschlagte Flüssigkeitsleitung, einen Gasbrenner und Flüssigkeitsleitung umgebenden, eine Brennkammer bildenden und von der zu fördernden Flüssigkeit durchströmten und dadurch gekühlten Mantel und eine gekühlte Bodenfläche aufweist, aus der ein Kondensatabfluß austritt.

Ein solches Hochdruckreinigungsgerät ist beispielsweise aus der DE 10041154 A1 bekannt.

Zur Kühlung der Brennkammer ist der Mantel doppelwandig ausgeführt und wird von der Flüssigkeit durchströmt, die anschließend in der Brennkammer aufgeheizt wird. Auch die Bodenfläche ist doppelwandig ausgebildet und steht mit dem Innenraum der doppelwandigen Mantelfläche in Verbindung, dadurch erfährt auch die Bodenfläche eine Flüssigkeitskühlung. Der konstruktive Aufwand ist jedoch erheblich, da durch die Doppelwandigkeit sowohl der Mantelfläche als auch der Bodenfläche komplizierte Abdichtungen notwendig werden, insbesondere im Bereich von Durchführungen für Flüssigkeitsleitungen. Bei der bekannten Anordnung wird die Flüssigkeitsleitung daher an der Oberseite in die Brennkammer eingeführt, dies ist aber nicht für alle Konstruktionen günstig. Bei einer Einfuhr an der Unterseite ergeben sich konstruktive Schwierigkeiten durch die Doppelwandigkeit und die Notwendigkeit der Abdichtung.

Es sind auch Hochdruckreinigungsgeräte bekannt, bei denen das Problem der Doppelwandigkeit umgangen wird, beispielsweise durch Verwendung von feuerfesten Materialien für die Bodenfläche (DE 2113416). Eine derartige Konstruktion führt aber zu einem sehr schweren Gerät, außerdem besteht die Gefahr, daß die feuerfesten Materialien, beispielsweise Zement, durch Kondensatwasser angegriffen werden.

Es ist Aufgabe der Erfindung, ein gattungsgemäßes Hochdruckreinigungsgerät so auszugestalten, daß eine effektive Kühlung auch im Bereich der Bodenfläche möglich ist, ohne daß dazu spezielle, hochtemperaturfeste Werkstoffe notwendig werden und ohne daß die abgedichtete Durchführung von Bauteilen und Leitungsabschnitten erschwert wird.

Diese Aufgabe wird bei einem Hochdruckreinigungsgerät der eingangs beschriebenen Art erfindungsgemäß dadurch gelöst, daß der Kondensatabfluß oberhalb der Bodenfläche angeordnet ist, so daß Kondensat erst dann in den Kondensatabfluß gelangt, wenn die Bodenfläche mit einer Kondensatschicht bedeckt ist.

Es wird also das beim Verbrennungsvorgang anfallende und sich an der gekühlten Innenwand der Brennkammer niederschlagende Kondensat bewußt aufgefangen und so in der Brennkammer gesammelt, daß die Bodenfläche mit einer Kondensatschicht bedeckt wird, deren Dicke durch die Höhe des Kondensatabflusses oberhalb der Bodenfläche bestimmt wird. Diese Kondensatschicht wird ständig durch zufließendes Kondensat erneuert, während ein Teil des die Bodenfläche bedeckenden Kondensats durch den Kondensatabfluß abgezogen wird. Auf diese Weise erfährt die Bodenfläche gegenüber der Brennkammer eine effektive Kühlung, und es ist ohne weiteres möglich, durch diese Kondensatschicht hindurch eine Rohrleitung oder dergleichen abgedichtet hindurchzuführen, die Bodenfläche bleibt trotzdem einlagig und muß nicht doppelwandig ausgebildet werden, wie bei anderen flüssigkeitsgekühlten Brennkammern.

Besonders vorteilhaft ist es, wenn die Bodenfläche von einer seitlichen Abschlußwand umgeben ist, die zusammen mit der Innenwand des Mantels einen Ringraum ausbildet, der über Öffnungen in der seitlichen Abschlußwand mit dem Raum oberhalb der Bodenfläche in Verbindung steht. Das Kondensat wird bei einer solchen Konstruktion definiert in dem Ringraum zwischen seitlicher Abschlußwand und Innenwand des Mantels gesammelt und tritt dann über die Öffnungen in den Raum oberhalb der Bodenfläche ein, dieser Raum wird von dem Kondensat bedeckt, und dort baut sich die Kondensatschicht auf, deren Dicke durch den Kondensatabfluß bestimmt wird.

Die seitliche Abschlußwand kann sich über die Position des Kondensatabflusses nach oben erstrecken.

Beispielsweise ist es vorteilhaft, wenn die Höhe der seitlichen Abschlußwand etwa 1/4 bis 1/3 der Höhe der Brennkammer beträgt.

Bei einer bevorzugten Ausführungsform ist vorgesehen, daß die Flüssigkeitsleitung die Form einer Wendel hat und in ihrem unteren Teil von der seitlichen Abschlußwand umgeben wird, diese liegt vorzugsweise eng an der Wendel an.

Die Breite des Ringraumes kann gering sein, sie liegt vorzugsweise zwischen 0,5 % und 8 % des Brennkammerdurchmessers.

Es ist vorteilhaft, wenn die Öffnungen in der seitlichen Abschlußwand über deren Umfang verteilt sind, so daß im Ringraum gesammeltes Kondensat von allen Seiten her in den Raum oberhalb der Bodenfläche eintreten kann.

Vorzugsweise sind die Öffnungen in der seitlichen Abschlußwand unterhalb der Höhe des Kondensatabflusses angeordnet, so daß sichergestellt ist, daß Kondensat in keiner Weise mit der Flüssigkeitsleitung in Verbindung kommt, sondern erst an der Unterseite des Ringraumes unmittelbar in die Kondensatschicht eingeleitet wird.

Der Ringraum ist an seiner Unterseite verschlossen.

Die spezielle Ausgestaltung der Bodenfläche macht es ohne weiteres möglich, daß gemäß einer bevorzugten Ausführungsform die Zu- und Abflußleitungen der Flüssigkeitsleitung abgedichtet durch die Bodenfläche und das darauf gesammelte Kondensat hindurchtreten.

Es ist vorteilhaft, wenn oberhalb der Bodenfläche und oberhalb des Kondensatabflusses eine die Brennkammer an deren Unterseite abdeckende Abdeckplatte angeordnet ist, es wird dadurch der Kondensatraum oberhalb der Bodenfläche getrennt vom Brennraum der Brennkammer.

Bei einer bevorzugten Ausführungsform ist vorgesehen, daß der Mantel doppelwandig ausgebildet ist und daß der Innenraum des Mantels mit einer die Brennkammer an seiner Oberseite überdeckenden Flüssigkeitskammer in Verbindung steht, durch welche die der Flüssigkeitsleitung zugeführte Flüssigkeit hindurchgeleitet ist. Damit ergibt sich eine Kühlung nicht nur im Bereich des doppelwandigen Mantels, sondern zusätzlich auch im Bereich der Oberseite der Brennkammer, da diese von der Flüssigkeitskammer überdeckt wird.

Vorzugsweise ist der Flüssigkeitskammer eine Füllstandskontrolle zugeordnet, die den Füllstand in der Flüssigkeitskammer um einen bestimmten Minimalwert oberhalb des Bodens der Flüssigkeitskammer aufrechterhält. Damit ist sichergestellt, daß die Flüssigkeitskammer immer eine ausreichende Füllmenge enthält, die die Oberseite der Brennkammer kühlen kann.

Der Gasbrenner greift vorzugsweise abgedichtet durch die Flüssigkeitskammer hindurch. Dadurch ergibt sich eine effektive Kühlung des Gasbrenners an der Außenseite der Brennkammer. Besonders effektiv läßt sich diese Kühlung gestalten, wenn die Flüssigkeitskammer in ihrem Boden eine den Gasbrenner umgebende Vertiefung aufweist. Dadurch wird die Höhe der Flüssigkeitsschicht in dem Bereich vergrößert, in dem der Gasbrenner durch die Flüssigkeitskammer hindurchgeführt ist.

Auch eine Rauchgasleitung kann vorzugsweise abgedichtet durch die Flüssigkeitskammer aus der Brennkammer herausgeführt sein.

Die beschriebene Konstruktion eignet sich besonders für einen Gasbrenner in Form eines rohrförmigen Oberflächenbrenners.

Es ist vorteilhaft, wenn die Flüssigkeitsleitung als Wendel angeordnet ist, welche den in die Wendel eintauchenden Gasbrenner konzentrisch umgibt. Dadurch erhält man eine besonders gleichmäßige Erwärmung der durch die Flüssigkeitsleitung strömenden Flüssigkeit.

Insbesondere kann die Flüssigkeitsleitung eine Doppelwendel ausbilden.

Gemäß einer bevorzugten Ausführungsform ist vorgesehen, daß die Brennkammer gasdicht verschlossen ist. Dadurch kann dieses Hochdruckreinigungsgerät auch in Räumen verwendet werden, die nicht speziell als Heizräume ausgebildet sind, da sowohl die Brenngaszufuhr als auch die Rauchgasabfuhr über Rohrleitungsverbindungen mit der gasdicht abgeschlossenen Brennkammer erfolgen können, die Umgebung wird durch die Gase in keiner Weise belastet.

Vorteilhaft ist es auch, wenn sich an den Kondensatabfluß ein Siphon anschließt, man erhält dadurch auch im Bereich des Kondensatabflusses eine gasdichte Abdichtung der Brennkammer.

Die nachfolgende Beschreibung bevorzugter Ausführungsformen der Erfindung dient im Zusammenhang mit der Zeichnung der näheren Erläuterung. Es zeigen:

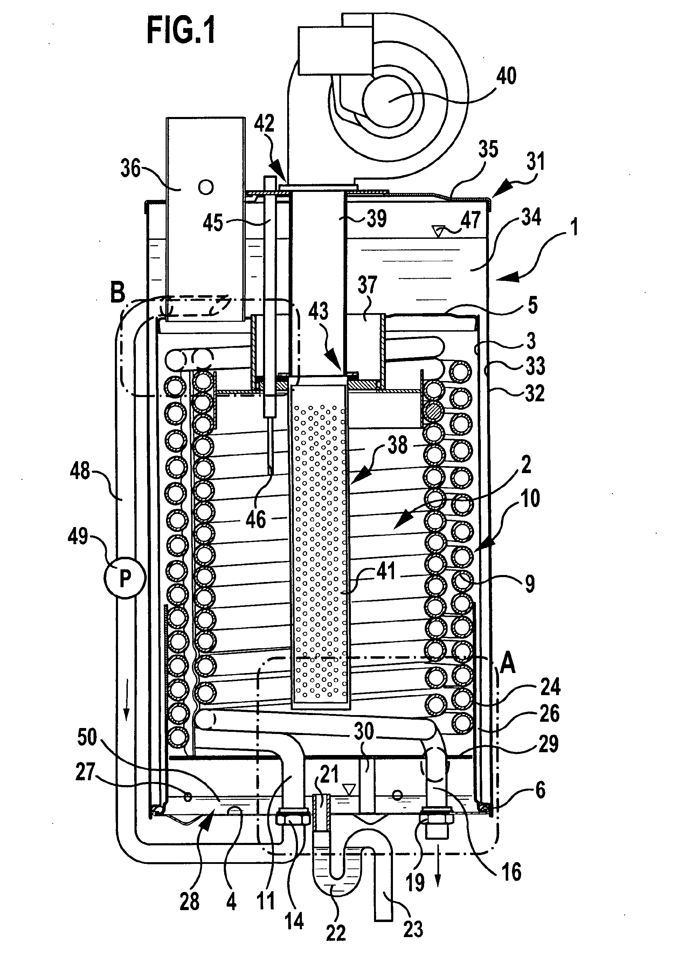

- Figur 1:: eine Längsschnittansicht durch die Heizeinrichtung eines Hochdruckreinigungsgerätes;
- Figur 2:: eine vergrößerte Detailansicht des Bereiches A in Figur 1 und

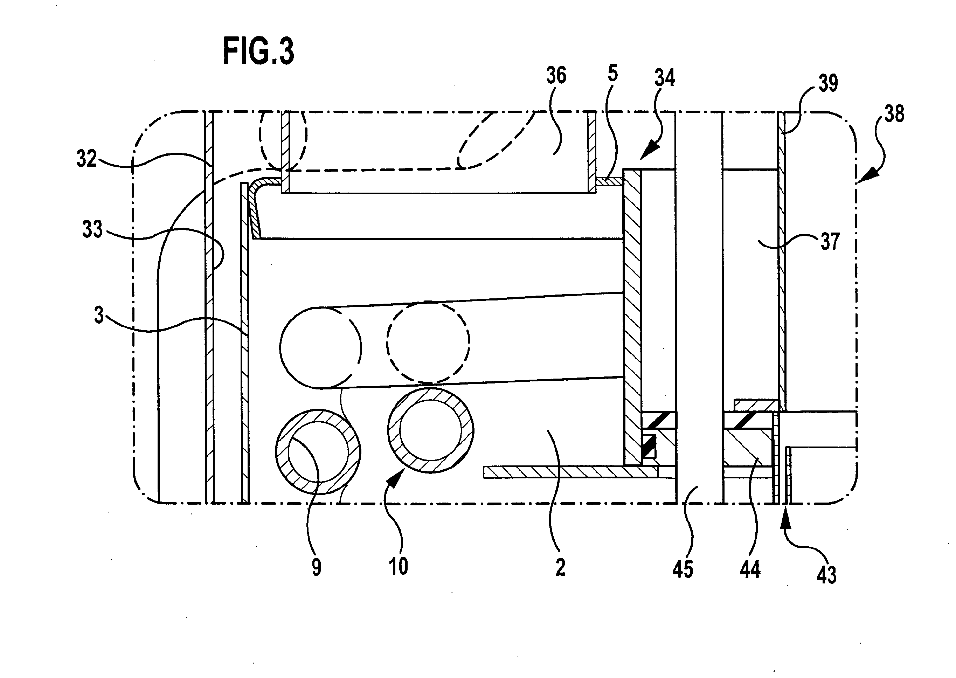

- Figur 3:: eine vergrößerte Detailsansicht des Bereiches B in Figur 1.

In der Zeichnung sind von dem Hochdruckreinigungsgerät nur die Teile dargestellt, die die Heizeinrichtung betreffen, dagegen sind andere üblicherweise bei Hochdruckreinigungsgeräten verwendete Teile wie Sprühlanzen, Dosiereinrichtungen, Chemikalienzufuhr etc. nicht dargestellt.

Die in der Zeichnung dargestellte Heizeinrichtung 1 weist eine zylindrische Brennkammer 2 auf, die durch eine zylindrische Seitenwand 3, eine Bodenfläche 4 und eine obere Deckelfläche 5 umgeben wird. Die Deckelfläche 5 ist an der Oberkante der Seitenwand 3 mit dieser dauerhaft abgedichtet verbunden, beispielsweise durch eine Verschweißung. Die Bodenfläche 4 und die Seitenwand 3 sind lösbar miteinander verbunden und durch eine elastische Ringdichtung 6 gegeneinander abgedichtet. Diese Ringdichtung 6 liegt einmal an der Oberseite der Bodenfläche 4 an und zum anderen an einem parallel dazu verlaufenden Abschnitt 7 einer nach außen gerichtete Abkröpfung 8 am unteren Ende der Seitenwand 3.

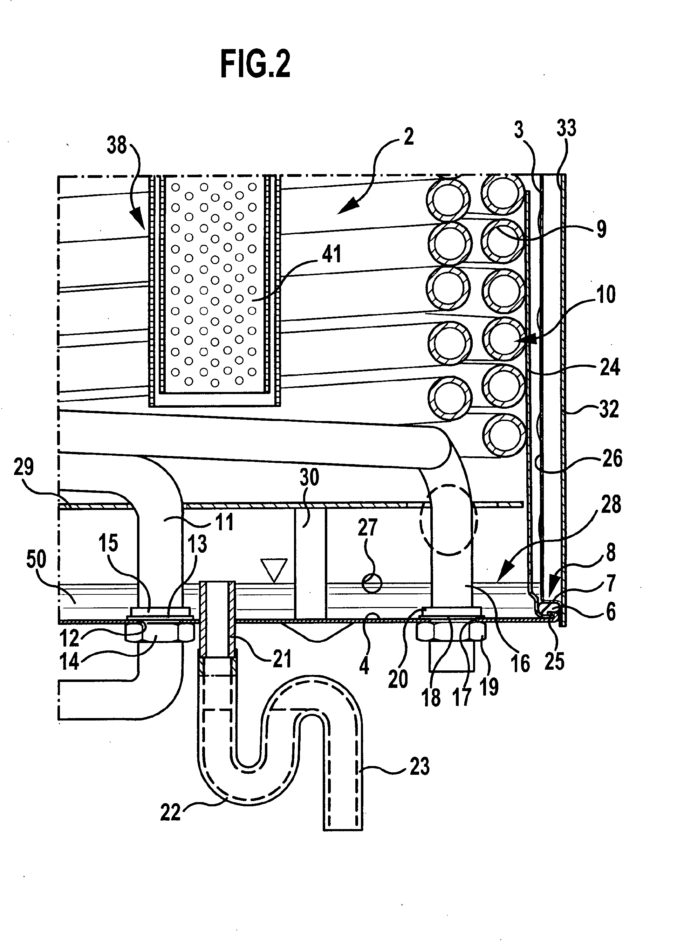

Im Inneren der Brennkammer 2 ist eine Flüssigkeitsleitung 9 in Form einer Doppelwendel 10 angeordnet, diese Doppelwendel 10 verläuft parallel zur zylindrischen Seitenwand 3 und reicht fast bis an diese heran. Eine Zufuhrleitung 11 zur Doppelwendel 10 ist abgedichtet durch eine Durchbrechung 12 in der Bodenfläche 4 hindurchgeführt, die Abdichtung erfolgt dabei durch einen metallischen Dichtring 13, der die Zufuhrleitung 11 umgibt und durch eine Dichtmutter 14 gegen eine Dichtfläche angedrückt wird (Figur 2).

In gleicher Weise wird die Abfuhrleitung 16 der Flüssigkeitsleitung 9 abgedichtet durch eine Durchbrechung 17 in der Bodenfläche 4 durch diese hindurchgeführt, die Abdichtung erfolgt auch hier durch einen metallischen Dichtring 18, der über eine Dichtmutter 19 gegen eine Dichtfläche 20 gedrückt wird.

In der Mitte der Bodenfläche 4 tritt ein Rohrstück 21 abgedichtet durch diese hindurch, die Abdichtung kann hier beispielsweise durch eine Verschweißung erfolgen. Das Rohrstück endet in einigem Abstand oberhalb der Bodenfläche 4, beispielsweise in einem Abstand von einigen Zentimetern, und es ist über einen Siphon 22 mit einem Abfluß 23 verbunden.

Parallel zu der zylindrischen Seitenwand 3 ist am unteren Ende der Brennkammer 2 eine seitliche Abschlußwand 24 angeordnet, die an ihrer Unterseite mit der Außenkante der Bodenfläche 4 abgedichtet verbunden ist, beispielsweise durch eine Umbördelung 25, und die zwischen sich und der Seitenwand 3 einen zylindrischen Ringraum 26 ausbildet, dessen Dicke in radialer Richtung etwa zwischen 0,5 % und 8 % des Durchmessers der Brennkammer 2 beträgt. Die seitliche Abschlußwand 24 zieht sich neben dem unteren Teil der Doppelwendel 10 an deren Außenseite anliegend so weit nach oben, daß etwa 1/4 bis 1/3 der Doppelwendel 10 von ihr umgeben wird.

In der seitliche Abschlußwand 24 sind über deren Umfang verteilt mehrere Öffnungen 27 angeordnet, die sich unterhalb des oberen Endes des Rohrstükkes 21 befinden und den Ringraum 26 mit dem oberhalb der Bodenfläche 4 angeordneten und von der seitlichen Abschlußwand 24 umgebenen Raum verbinden, der nachstehend als Kondensatsammelraum 28 bezeichnet wird. Dieser wird an seiner Oberseite von einer plattenförmigen Abdeckung 29 überfangen, die unterhalb der Doppelwendel 10 angeordnet ist und über eine Stütze 30 mit der Bodenfläche 4 verbunden ist.

Die Brennkammer 2 wird außenseitig von einer Haube 31 überfangen, deren zylindrische Seitenwand 32 die Seitenwand 3 der Brennkammer 2 in geringem Abstand konzentrisch umgibt und die an ihrem unteren Ende mit der Seitenwand 3 abgedichtet verbunden ist, beispielsweise durch eine Verschweißung (Figur 2). Die beiden Seitenwände 3 und 32 bilden zwischen sich einen sich über die gesamte Höhe der Brennkammer 2 erstreckenden Ringraum 33 aus, der in Verbindung steht mit einer Flüssigkeitskammer 34, die oberhalb der Brennkammer 2 durch die Deckelfläche 5 der Brennkammer 2 und durch die die Seitenwand 3 überragende Seitenwand 32 gebildet wird, diese Flüssigkeitskammer 34 wird an ihrer Oberseite von einem diese überfangenden Dekkel 35 verschlossen.

Aus der Brennkammer 2 führt eine Rauchgasableitung 36 abgedichtet durch die Flüssigkeitskammer 34 hindurch, diese Rauchgasableitung 36 beginnt an der Deckelfläche 5 der Brennkammer 2 und ist in diesem Bereich mit der Dekkelfläche 5 dauerhaft dicht verbunden, beispielsweise durch eine Verschweißung. Die Rauchgasableitung 36 tritt abgedichtet auch durch den Deckel 35 hindurch und kann dort mit einer in der Zeichnung nicht dargestellten ortsgebundenen Rauchgasableitung verbunden werden.

Im zentralen Bereich weist die Deckelfläche 5 eine in die Brennkammer 2 hineinragende Vertiefung 37 auf, durch den Boden 38 dieser Vertiefung 37 ist ein rohrförmiger Gasbrenner 38 in die Brennkammer 2 eingeführt, dieser Gasbrenner 38 durchsetzt mit einem geschlossenen Rohrabschnitt 39 abgedichtet die Flüssigkeitskammer 34 und steht außerhalb der Flüssigkeitskammer 34 mit einem Gebläse 40 in Verbindung, welches ein Gas-Luftgemisch in den Gasbrenner 38 fördert.

Im Inneren der Brennkammer 2 taucht der Gasbrenner 38 in das Zentrum der Doppelwendel 10 ein und erstreckt sich mit einem über seine gesamte Oberfläche perforierten Umfangsbereich 41 bis zum unteren Ende der Doppelwendel 10. Am unteren Ende ist der rohrförmige perforierte Umfangsbereich 41 verschlossen.

Die Durchführung 42 des Gasbrenners 38 durch den Deckel 35 ist abgedichtet ausgeführt, ebenso die Durchführung 43 des Gasbrenners 38 durch den Boden der Vertiefung 37. Dazu ist im Bereich der Durchführung 43 eine den Gasbrenner 38 umgebende Dichtung 44 vorgesehen, die gleichzeitig auch als Dichtung für eine die Flüssigkeitskammer 34 ebenfalls abgedichtet durchsetzende Zündeinrichtung 45 dient. Diese Zündeinrichtung 45 endet mit einer Zündelektrode 46 neben dem perforierten Umfangsbereich 41 des Gasbrenners 38.

Die Flüssigkeitskammer 34 steht über eine in der Zeichnung nicht dargestellte Zufuhrleitung mit einer Flüssigkeitsquelle in Verbindung, beispielsweise einer Wasserquelle, der Füllstand der Flüssigkeit im Inneren der Flüssigkeitskammer 34 wird durch eine in der Zeichnung ebenfalls nicht dargestellte und nur durch ein dreieckiges Symbol 47 markierte Füllstandskontrolle aufrecht erhalten. Es kann sich dabei beispielsweise um einen an sich bekannten Füllkasten mit Schwimmerventilbetätigung handeln. Die Flüssigkeit füllt damit die Flüssigkeitskammer 34 bis zu einem bestimmten Niveau und natürlich auch den mit ihr in Verbindung stehenden Ringraum 33, so daß die Brennkammer 2 dadurch von einem Kühlmantel umgeben wird, mit der Flüssigkeitsfüllung als Kühlmittel.

Eine Versorgungsleitung 48 führt aus der Flüssigkeitskammer 34 zu einer in der Zeichnung nur schematisch dargestellten Hochdruckpumpe 49, und diese fördert die Flüssigkeit unter hohem Druck zu der Zufuhrleitung 11, über die die unter hohem Druck stehende Flüssigkeit durch die Doppelwendel 10 geleitet wird. An die Abfuhrleitung 16 der Doppelwendel 10 schließt sich in an sich bekannter Weise eine zu einer Sprühlanze oder einer Sprühpistole führende Hochdruckleitung an, die in der Zeichnung nicht dargestellt ist.

Der in der Zeichnung dargestellte Gasbrenner 38 ist ein Oberflächenbrenner, in dem perforierten Rohrabschnitt 39 strömt durch dessen Perforationen ein Brenngas-Luftgemisch aus, dieses verbrennt außerhalb des perforierten Umfangsbereichs 41 und beaufschlagt dadurch die Doppelwendel 10 gleichmäßig über deren Höhe mit heißen Brenngasen. Die Rauchgase werden anschließend aus der Brennkammer 2 über die Rauchgasableitung 36 abgeführt.

Die Brennkammer 2 ist bei dieser Ausgestaltung gasdicht abgeschlossen, so daß die Brenngas-Luftmischung nur durch den Gasbrenner 38 abgedichtet in die Brennkammer 2 eintreten kann, während die Rauchgase nur abgedichtet über die Rauchgasableitung 36 nach außen gelangen können, alle anderen Durchführungen der Brennkammer 2 sind so gasdicht abgesichert, daß keine Verbindung zur Umgebung besteht. Es ist dadurch möglich, die Heizeinrichtung 1 auch in Räumen zu benutzen, die nicht als Heizräume ausgestaltet sind.

Die heißen Brenngase treffen auch auf die Seitenwand 3 der Brennkammer 2, diese Seitenwand 3 ist eine Seitenwand des Ringraums 33 und wird dadurch durch die Flüssigkeitsfüllung des Ringraums 33 gekühlt. An der Innenseite der Seitenwand 3 kondensiert daher ein Teil der Brenngase, und das kondensierte Wasser läuft an der Innenseite der Seitenwand 3 nach unten bis in den von der seitlichen Abschlußwand 24 gebildeten Ringraum 26, der als Sammelraum für das Kondensat wirkt. Sobald der Ringraum 26 eine gewisse Menge Kondensat gesammelt hat, tritt dies durch die Öffnungen 27 in den Kondensatsammelraum 28 ein und bedeckt die gesamte Bodenfläche 4 mit einer Kondensatschicht 50, deren Höhe durch die Höhe des Rohrstückes 21 bestimmt wird. Sobald mehr Kondensat in die Kondensatschicht 50 eingeführt wird, fließt ein Teil des Kondensates durch das Rohrstück 21 zum Abfluß 23, der Siphon 22 schließt dabei die Brennkammer 2 gasdicht ab, so daß auch in diesem Bereich die Gasdichtigkeit der Brennkammer 2 gewährleistet ist.

Die Kondensatschicht 50 kühlt die Bodenfläche 4, so daß die Brennkammer 2 bei der beschriebenen Konstruktion allseitig flüssigkeitsgekühlte Außenwände aufweist, im Bereich der Seitenwand 3 durch den flüssigkeitsgefüllten Ringraum 33, an der Oberseite durch die ebenfalls flüssigkeitsgefüllte Flüssigkeitskammer 34 und im Bereich der Bodenfläche 4 durch die Kondensatschicht 50.

## Patentansprüche

1. Hochdruckreinigungsgerät mit einer Heizeinrichtung für geförderte Flüssigkeit, welche Heizeinrichtung einen Gasbrenner, eine von den Brenngasen des Gasbrenners beaufschlagte Flüssigkeitsleitung, einen Gasbrenner und Flüssigkeitsleitung umgebenden, eine Brennkammer bildenden und von der zu fördernden Flüssigkeit durchströmten und dadurch gekühlten Mantel und eine gekühlte Bodenfläche aufweist, aus der ein Kondensatabfluß austritt,
**dadurch gekennzeichnet, daß** der Kondensatabfluß (21) oberhalb der Bodenfläche (4) angeordnet ist, so daß Kondensat erst dann in den Kondensatabfluß (21) gelangt, wenn die Bodenfläche (4) mit einer Kondensatschicht (50) bedeckt ist.

2. Hochdruckreinigungsgerät nach Anspruch 1, **dadurch gekennzeichnet, daß** die Bodenfläche (4) von einer seitlichen Abschlußwand (24) umgeben ist, die zusammen mit der Innenwand (3) des Mantels (33) einen Ringraum (26) ausbildet, der über Öffnungen (27) in der seitlichen Abschlußwand (24) mit dem Raum (28) oberhalb der Bodenfläche (4) in Verbindung steht.

3. Hochdruckreinigungsgerät nach Anspruch 2, **dadurch gekennzeichnet, daß** die seitliche Abschlußwand (24) sich über die Position des Kondensatabflusses (21) nach oben erstreckt.

4. Hochdruckreinigungsgerät nach Anspruch 3, **dadurch gekennzeichnet, daß** die Höhe der seitlichen Abschlußwand (24) etwa 1/4 bis 1/3 der Brennkammer (2) beträgt.

5. Hochdruckreinigungsgerät nach einem der Ansprüche 2 bis 4, **dadurch gekennzeichnet, daß** die Flüssigkeitsleitung (9) die Form einer Wendel (10) hat und in ihrem unteren Teil von der seitlichen Abschlußwand (24) umgeben wird.

6. Hochdruckreinigungsgerät nach Anspruch 5, **dadurch gekennzeichnet, daß** die seitliche Abschlußwand (24) eng an der Wendel (10) anliegt.

7. Hochdruckreinigungsgerät nach einem der Ansprüche 2 bis 6, **dadurch gekennzeichnet, daß** die Breite des Ringraumes (26) zwischen 0,5 % und 8 % des Brennkammerdurchmessers beträgt.

8. Hochdruckreinigungsgerät nach einem der Ansprüche 2 bis 7, **dadurch gekennzeichnet, daß** die Öffnungen (27) in der seitlichen Abschlußwand (24) über deren Umfang verteilt sind.

9. Hochdruckreinigungsgerät nach einem der Ansprüche 2 bis 8, **dadurch gekennzeichnet, daß** die Öffnungen (27) in der seitlichen Abschlußwand (24) unterhalb der Höhe des Kondensatabflusses (21) angeordnet sind.

10. Hochdruckreinigungsgerät nach einem der Ansprüche 2 bis 9, **dadurch gekennzeichnet, daß** der Ringraum (26) an der Unterseite verschlossen ist.

11. Hochdruckreinigungsgerät nach einem der voranstehenden Ansprüche, **dadurch gekennzeichnet, daß** die Zu- und Abflußleitungen (11, 16) der Flüssigkeitsleitung (9) abgedichtet durch die Bodenfläche (4) und das darauf gesammelte Kondensat (50) hindurchtreten.

12. Hochdruckreinigungsgerät nach einem der voranstehenden Ansprüche, **dadurch gekennzeichnet, daß** oberhalb der Bodenfläche (4) und oberhalb des Kondensatabflusses (21) eine die Brennkammer (2) an deren Unterseite abdeckende Abdeckplatte (29) angeordnet ist.

13. Hochdruckreinigungsgerät nach einem der voranstehenden Ansprüche, **dadurch gekennzeichnet, daß** der Mantel doppelwandig ausgebildet ist und daß der Innenraum (33) des Mantels mit einer die Brennkammer (2) an ihrer Oberseite überdeckenden Flüssigkeitskammer (34) in Verbindung steht, durch welche die der Flüssigkeitsleitung (9) zugeführte Flüssigkeit hindurchgeleitet ist.

14. Hochdruckreinigungsgerät nach Anspruch 13, **dadurch gekennzeichnet, daß** der Flüssigkeitskammer (34) eine Füllstandskontrolle (47) zugeordnet ist, die den Füllstand in der Flüssigkeitskammer (34) um einen bestimmten Minimalwert oberhalb des Bodens der Flüssigkeitskammer (34) aufrecht erhält.

15. Hochdruckreinigungsgerät nach einem der Ansprüche 13 oder 14, **dadurch gekennzeichnet, daß** der Gasbrenner (38) abgedichtet durch die Flüssigkeitskammer (34) hindurchgreift.

16. Hochdruckreinigungsgerät nach Anspruch 15, **dadurch gekennzeichnet, daß** die Flüssigkeitskammer (34) in ihrem Boden eine den Gasbrenner (38) umgebende Vertiefung (37) aufweist.

17. Hochdruckreinigungsgerät nach einem der Ansprüche 13 bis 16, **dadurch gekennzeichnet, daß** eine Rauchgasleitung (36) aus der Brennkammer (2) abgedichtet durch die Flüssigkeitskammer (34) hindurchführt.

18. Hochdruckreinigungsgerät nach einem der voranstehenden Ansprüche, **dadurch gekennzeichnet, daß** der Gasbrenner (38) ein rohrförmiger Oberflächenbrenner ist.

19. Hochdruckreinigungsgerät nach einem der voranstehenden Ansprüche, **dadurch gekennzeichnet, daß** die Flüssigkeitsleitung (9) als Wendel (10) ausgebildet ist, welche den in die Wendel (10) eintauchenden Gasbrenner (38) konzentrisch umgibt.

20. Hochdruckreinigungsgerät nach Anspruch 19, **dadurch gekennzeichnet, daß** die Flüssigkeitsleitung (9) eine Doppelwendel (10) ausbildet.

21. Hochdruckreinigungsgerät nach einem der voranstehenden Ansprüche, **dadurch gekennzeichnet, daß** die Brennkammer (2) gasdicht verschlossen ist.

22. Hochdruckreinigungsgerät nach einem der voranstehenden Ansprüche, **dadurch gekennzeichnet, daß** sich an den Kondensatabfluß (21) ein Siphon (22) anschließt.
